# FASCICULE DE BREVET EUROPEEN

(11) **EP 3 289 861 B1**
(45) Date de publication et mention de la délivrance du brevet: **27.08.2025**
(21) Numéro de dépôt: 17188597.3
(22) Date de dépôt: 30.08.2017
(51) Int. Cl.: A01K 3/00, G08B 13/12, G01R 19/145

(54) **SYSTÈME DE CONTRÔLE POUR CLÔTURE ÉLECTRIQUE**
KONTROLLSYSTEM FÜR ELEKTROZAUN
CONTROL SYSTEM FOR AN ELECTRIC FENCE

(30) Priorité: 31.08.2016 FR 1658075
(43) Date de publication de la demande: 07.03.2018
(73) Titulaire: Lacme Holding, 92250 La Garenne Colombes (FR)
(72) Inventeur: HAMM, Valéry, 72200 La Flèche (FR)
(74) Mandataire: Ipsilon

(56) Documents cités:
- WO-A1-2005/052607
- WO-A1-2009/028966
- JP-A- 2014 131 494
- US-A1- 2002 033 756

## Description

### DaMAI NE DE L'INVENTION

L'invention concerne un système de contrôle pour clôture électrique, comprenant un électrificateur et un terminal de poche en liaison RF entre eux.

### ART ANTÉRIEUR

La fonction d'un électrificateur est d'envoyer régulièrement des impulsions dissuasives dans une clôture électrique de façon à empêcher qu'un animal passe de l'autre côté de celle-ci. Si l'électrificateur est non fonctionnel, soit parce que son alimentation électrique est pour une raison ou une autre coupée, soit parce qu'il est en panne, ou encore si la clôture est en mauvais état, par exemple du fait d'une poussée végétative excessive, l'enclos n'est plus ou trop peu électrifié. Les animaux peuvent alors passer et les conséquences peuvent être graves. C'est pourquoi de nombreux utilisateurs s'organisent pour se rendre très régulièrement devant leur(s) électrificateur(s) (souvent installé(s) dans une grange), et/ou pour passer le long de leur clôture afin de la contrôler. Ceci pour réduire au maximum le risque que la clôture soit devenue inefficace depuis longtemps sans qu'ils ne s'en soient rendu compte.

Au fil des années les fabricants d'électrificateurs ont développé des Interfaces Homme-Machine (IHM, c'est-à-dire des moyens physiques au niveau de l'enveloppe matérielle de l'électrificateur) toujours plus sophistiquées pour faciliter ce travail de contrôle de l'état de l'électrificateur et/ou de la clôture. Elles contiennent par exemple une ou plusieurs diodes électroluminescentes associées à des sérigraphies colorées, un écran alphanumérique ou numérique renseignant par exemple sur la tension des impulsions électriques présentes au départ de la clôture et/ou au niveau de répondeurs placés le long de celle-ci, des boutons/actionneurs pour mettre en marche ou arrêter l'électrificateur ou pour modifier la puissance des impulsions électriques, une alarme sonore et son bouton marche/arrêt associé. En fonction des segments de marché servis, ces IHM sont le fruit de compromis entre les coûts de réalisation acceptables et la plus facile, plus rapide et plus claire, compréhension des phénomènes à surveiller.

Habitué à ces IHM l'utilisateur ne passe dans ce contexte qu'un temps minimum à apprendre ou retrouver le sens associé à chaque évènement inattendu. Et le temps global passé à surveiller régulièrement l'état de fonctionnement de l'électrificateur et, au-delà de lui, de la clôture est quasi exclusivement constitué par le temps passé à se rendre devant l'électrificateur ou à marcher le long de la clôture.

Avec l'arrivée des réseaux téléphoniques mobiles, les fabricants d'électrificateurs ont proposé des systèmes nouveaux formés par la combinaison d'un électrificateur muni d'une carte SIM et d'un téléphone mobile de façon que l'utilisateur soit prévenu, grâce à la liaison radiofréquence RF établie entre les deux, de toute alarme, à quelque heure que ce soit, et où qu'il soit, du moment qu'il ait son téléphone mobile sur lui et qu'il capte le réseau. Ces systèmes permettent par l'échange de minimessages (en anglais SMS) de commander à distance la mise en marche/arrêt de l'électrificateur. Ils préviennent aussi l'utilisateur lorsqu'une alarme se déclenche au niveau de l'électrificateur. Le niveau à partir duquel ces alarmes se déclenchent est ajustable à distance par minimessages.

Les utilisateurs de ces systèmes à minimessages ont ainsi vu le temps, très régulièrement consacré à vérifier le bon état de leurs électrificateurs et des clôtures correspondantes, considérablement diminuer, de sorte que la partie de ce temps consacrée à l'apprentissage, à l'interprétation et à l'usage des minimessages est finalement proportionnellement devenue significative.

Le document WO 2009/028 966 divulgue un tel système de contrôle pour clôture électrique, comprenant un électrificateur et un assistant personnel numérique ou un téléphone cellulaire, qui transmettent des minimessages à l'exclusion de toute image.

Un autre problème rencontré avec les solutions existantes à base de minimessages est que si, pour une raison ou une autre, l'utilisateur n'a pas conservé l'accès à l'historique de ses minimessages, il ne peut pas savoir si la clôture électrique est en fonctionnement ou à l'arrêt. Dans le doute, lorsqu'il consulte à nouveau son téléphone, le seul moyen pour lui de trancher à distance sur ce point est de renvoyer une commande de marche ou d'arrêt dans le sens désiré, commande dont il a parfois du mal à retrouver la bonne syntaxe.

Un autre problème est que si, pour une raison ou une autre, son téléphone n'est pas utilisable, l'utilisateur ne peut pas se dépanner avec un téléphone d'appoint car l'accès à l'IHM virtuelle à base de minimessages de son électrificateur est verrouillé par la présence effective de la carte SIM.

Un autre problème est qu'un utilisateur de solutions existantes à base de minimessages possède souvent plusieurs électrificateurs qui fonctionnent pour lui sur des enclos distincts. Bien sûr, lorsqu'il est dans sa grange il les reconnait instantanément grâce à la couleur du produit, à sa sérigraphie, à son ordre de position dans l'espace de la grange ou encore, par exemple s'il est trop couvert de poussière, à la signature sonore caractéristique des impulsions délivrées par un modèle ou une marque d'électrificateur plutôt qu'un autre. Mais ce travail de reconnaissance rapide ne se fait pas aussi instantanément lorsqu'un minimessage lui arrive et que la distinction de l'origine dudit message doit se faire uniquement sur un nom.

Un autre problème rencontré est que le caractère textuel des minimessages ne retranscrit pas aussi bien qu'une alarme sonore le degré d'importance (et d'urgence à devoir éventuellement la traiter) d'une alarme exprimée par exemple par une sirène au niveau de l'IHM physique de l'électrificateur.

Un autre problème rencontré est qu'un utilisateur qui aurait dans un premier temps, lors de l'achat, fait l'économie d'une version plus sophistiquée d'un élément possible de l'IHM physique de son électrificateur (par exemple usage d'un écran LCD plutôt que d'un barregraph pour surveiller l'état de l'enclos) ne peut plus par la suite changer d'avis. Il ne peut pas ramener son produit pour demander à ce qu'on la lui rajoute. Les électrificateurs sont en effet soumis pour la sécurité de tous à des réglementations draconiennes de sorte que leur modification après commercialisation, qui nécessiterait une nouvelle vérification exhaustive de ces contraintes, ne se justifierait pas sur le plan économique. Il serait pourtant bénéfique à l'utilisateur qu'il puisse au moins au niveau de son IHM virtuelle bénéficier de cette possibilité, défi auquel les systèmes à base de minimessages ne peuvent répondre.

Un autre problème rencontré est que les électrificateurs sont parfois associés à des répondeurs placés le long de l'enclos. Ces répondeurs mesurent l'état des impulsions électriques qu'ils observent circuler à leur niveau et en informent l'électrificateur en début d'enclos. Avec les systèmes à base de minimessages, plus il y a de répondeurs, plus il est difficile à l'utilisateur de se souvenir de leur distribution spatiale le long de l'enclos et donc d'interpréter le plus efficacement et rapidement possible leur éventuelle alarme.

Un autre problème rencontré est que certains signaux d'alarme peuvent présenter un caractère erratique en fonction de la météo. Ils peuvent aussi se répéter de façon régulière à certains moments de la journée ou de la saison. Ceci peut être le cas par exemple en fonction du degré d'humidité de la végétation au contact de l'enclos, ou de sa quantité. L'utilisateur aurait alors avantage à se voir informé par une courbe historique du paramètre suivi conditionnant l'alarme, courbe que les systèmes à base de minimessages ne peuvent pas lui fournir.

### BUT ET RÉSUMÉ DE L'I NVENTION

Un but de l'invention est de proposer un système de contrôle pour clôture électrique qui évite les inconvénients précédents.

Un autre but de l'invention est de proposer un système de contrôle pour clôture électrique qui assure les fonctions de contrôle de manière rapide et sûre.

L'invention a pour objet un système de contrôle pour clôture électrique, comprenant un électrificateur et un terminal de poche en liaison RF entre eux, caractérisé en ce que lors d'une opération de vérification à distance par l'utilisateur, du fonctionnement de l'électrificateur, le terminal de poche, au moyen d'une application dédiée, est adapté à afficher sur son écran, une reproduction de l'électrificateur sous forme d'une image comprenant à la fois une silhouette caractéristique de l'électrificateur et une représentation graphique de témoins du fonctionnement en cours de l'électrificateur dans leur position relative sur la silhouette, le terminal de poche étant configuré de façon que l'image observée sur un écran du terminal de poche par l'utilisateur corresponde à celle qu'il aurait s'il était en présence de l'électrificateur.

Dans le cadre de la présente demande de brevet, une application dédiée est aussi bien une application dédiée mise en mémoire du terminal de poche, qu'une application accessible sous forme de page dédiée sur la toile, et lancée au moyen d'un navigateur.

Le terminal de poche comporte de manière classique plusieurs applications dédiées, dont l'une dédiée à la vérification à distance par l'utilisateur du fonctionnement de l'électrificateur. Cette application dédiée spécifique assure la représentation sur l'écran du terminal de poche, de la silhouette caractéristique de l'électrificateur et de ses témoins de fonctionnement, dans leur position relative sur ladite silhouette. Dans le cas de plusieurs électrificateurs, l'application dédiée peut assurer sur l'écran du terminal de poche, la représentation des différents électrificateurs dans l'ordre dans lequel ils sont physiquement installés. Ainsi, l'image observée sur l'écran du terminal de poche par l'utilisateur correspond à ce qu'il verrait s'il était physiquement en présence des électrificateurs.

Selon un mode de réalisation, le terminal de poche assure la reproduction par son et/ou vibration d'au moins une composante d'un message mécanique, cette composante étant prise parmi l'ensemble comprenant à la fois la réplique des signaux sonores en cours de l'électrificateur et celle des vibrations en cours de l'électrificateur.

De préférence, la composante est celle du message mécanique qui serait entendu et/ou ressenti physiquement lors de chaque impulsion par l'utilisateur, si celui-ci se tenait, à ce moment-là devant l'électrificateur, avec la main placée sur une partie du boîtier de l'électrificateur non soumise aux impulsions périodiques de haute tension.

De préférence, la réplique des signaux sonores de l'électrificateur comprend celle du signal d'alarme et l'interruption à distance de ce signal se commande par action à l'écran du terminal de poche sur la représentation graphique du bouton de désarmement placé sur la silhouette dans la même position relative que sur l'électrificateur dans la réalité.

Selon un mode de réalisation, en cas de pluralité d'électrificateurs en liaison RF avec le même terminal de poche, lors d'une opération de vérification à distance du fonctionnement de l'un des électrificateurs, le terminal de poche assure sur son écran la représentation simultanée des images correspondant aux différents électrificateurs.

Avantageusement, un bouton graphique de commande de marche/arrêt à distance de l'électrificateur n'en disposant pas physiquement est présenté sur l'écran du terminal de poche, sur, ou au voisinage immédiat de, la silhouette de l'électrificateur.

Les boutons de marche/arrêt de l'électrificateur et/ou de désarmement de l'alarme peuvent être actionnés à l'écran d'un simple clic.

De manière avantageuse, le terminal de poche affiche sur son écran l'identification donnée par l'utilisateur à l'électrificateur.

Cette identification est utile et particulièrement nécessaire dans le cas de plusieurs électrificateurs éventuellement de modèle et présentation identiques assurant le contrôle d'enclos distincts.

Selon un mode de réalisation, lorsque la clôture électrique comporte des répondeurs, le terminal de poche affiche sur son écran l'identification donnée par l'utilisateur à chacun des répondeurs et leur image.

De manière avantageuse, le terminal de poche affiche sur son écran, la tension de la clôture électrique mesurée par l'électrificateur ou le répondeur.

Selon un mode de réalisation, en cas de signal d'alarme, le terminal de poche affiche sur son écran un fond de carte géographique sur lequel est géolocalisé le répondeur ou l'électrificateur émetteur du signal d'alarme.

Cette disposition est avantageuse dans la mesure où, en cas d'alarme dans une installation à plusieurs enclos, elle assure l'identification géographique immédiate de l'électrificateur en alarme.

De préférence le marqueur de géolocalisation sur la carte est une miniature donnant accès, sur demande, à une photographie en situation du répondeur à l'origine de l'émission du signal d'alarme.

La photographie du répondeur, prise en situation par l'utilisateur qui l'a installé sur le terrain, à une hauteur, sous un angle et dans un environnement de dissimulation donné, est importante et utile. En effet, avec la miniaturisation des composants, le répondeur est devenu un produit particulièrement discret, et l'utilisateur peut rencontrer des difficultés pour le retrouver rapidement. De plus la seule connaissance de la coordonnée GPS d'un répondeur en alarme peut ne pas suffire à permettre de diagnostiquer à distance la nature précise d'un problème. En effet deux répondeurs peuvent être placés verticalement l'un au-dessus de l'autre pour monitorer deux conducteurs distincts d'un même enclos. La photographie du répondeur en situation résout ce cas de figure.

De préférence, sur commande de l'utilisateur, le terminal de poche affiche sur son écran la courbe représentative de l'historique des mesures d'un paramètre de la clôture électrique par l'électrificateur. Cette courbe permet en un clin d'œil d'appréhender les variations périodiques, au fil de la journée ou des saisons, de l'état de l'enclos. Les performances de la clôture électrique variant en effet fortement en fonction de la quantité de végétation au contact ainsi que du taux d'humidité aux alentours, le diagnostic à distance d'une alarme intermittente revenant périodiquement en est grandement facilité.

Selon un mode de réalisation, sur commande de l'utilisateur, le terminal de poche assure l'application, sur la silhouette de l'électrificateur et/ou dans les signaux sonores, d'options d'IHM non présentes physiquement dans l'électrificateur mais disponibles sur d'autres électrificateurs plus sophistiqués de la même origine.

Ces options d'IHM sont par exemple des diodes électroluminescentes associées à des sérigraphies colorées, un écran numérique ou alphanumérique renseignant sur la tension des impulsions électriques présentes au départ de la clôture et/ou au niveau de répondeurs placés le long de celle-ci, des boutons ou actionneurs pour mettre en marche ou arrêter l'électrificateur, ou pour modifier la puissance des impulsions électriques, et une alarme sonore et son bouton de commande. Absentes sur les modèles économiques ou d'entrée de gamme d'un fabricant donné, ces options d'IHM peuvent être disponibles progressivement sur les enveloppes physiques des modèles de plus en plus haut de gamme de la même origine.

Selon un mode réalisation, le terminal de poche comporte une application dédiée à la commande automatique d'arrêt, et de mise en marche, à heures fixes, de l'électrificateur. Ainsi l'électrificateur est automatiquement arrêté à heure fixe le soir et remis en marche à heure fixe le matin, dans le cas où le bétail est rentré pour la nuit, par exemple.

Selon un mode de réalisation, le terminal de poche comporte une application dédiée à l'affichage dans le temps du nombre de touches de la clôture électrique par un animal. En effet, l'augmentation du nombre de touches de la clôture par un animal est révélateur d'une situation de risque ou de trouble, tel que par exemple un besoin d'eau, qu'il est préférable de ne pas laisser perdurer.

### DESCRIPTION DÉTAILLÉE

Le système de contrôle pour clôture électrique selon l'invention se compose d'un électrificateur de clôture électrique et d'un terminal de poche (en anglais smartphone), en liaison RF entre eux, par le biais d'un réseau RF public ou d'une transmission RF privée. Cette liaison RF permet, à partir d'un terminal de poche, de vérifier à distance le fonctionnement de l'électrificateur de la clôture électrique et celui de la clôture électrique.

Cette vérification s'effectue, à partir du terminal de poche, par lancement d'une application dédiée. Cette application dédiée tient à jour des informations implantées dans les mémoires de l'électronique de l'électrificateur, de l'électronique du terminal de poche, et éventuellement dans des bases de données du nuage (en anglais cloud - celui de l'internet). Au cours de cette vérification, le terminal de poche affiche sur son écran une reproduction de l'électrificateur sous la forme d'une image. Cette image comprend à la fois la silhouette caractéristique de l'électrificateur et la représentation graphique des témoins de fonctionnement de l'électrificateur. Ces témoins de fonctionnement sont représentés, sur la silhouette caractéristique de l'électrificateur, dans leur position relative. De ce fait, l'image observée sur l'écran du terminal de poche par l'utilisateur correspond à celle qu'il aurait s'il était en présence de l'électrificateur. Selon l'invention, la représentation graphique des témoins de fonctionnement de l'électrificateur est effectuée pour tous ou pour une partie d'entre eux.

Selon un mode de réalisation de l'invention, en cours de vérification du fonctionnement de l'électrificateur, le terminal de poche émet, sur un rythme régulier rappelant celui des impulsions de l'électrificateur, un signal sonore analogue à celui, émis par l'électrificateur, qui serait entendu physiquement lors de chaque impulsion si l'utilisateur se tenait, à ce moment-là, devant l'électrificateur. De manière analogue, en cas de non-fonctionnement de l'électrificateur, le terminal de poche n'émet aucun signal sonore. De manière similaire, si l'électrificateur est en mode d'alarme sonore, le terminal de poche émet un signal sonore analogue à celui qui serait entendu par l'utilisateur à proximité de l'électrificateur.

Selon un mode de réalisation, le terminal de poche émet un signal vibratoire analogue à celui qui serait ressenti par l'utilisateur s'il se tenait, à ce moment-là, à proximité immédiate de l'électrificateur avec la main placée sur une partie du boîtier de l'électrificateur non soumise aux impulsions périodiques de haute tension.

Selon un mode de réalisation, le système de contrôle pour clôture électrique s'applique à plusieurs clôtures électriques au moyen d'un terminal de poche unique. Dans ce cas, le terminal de poche affiche sur son écran les silhouettes de plusieurs électrificateurs avec la représentation graphique de tout ou partie de leurs témoins de fonctionnement respectifs. Avantageusement cet ordre peut être réorganisé à l'écran du terminal de poche par l'utilisateur pour correspondre à l'ordre physique dans lequel sont physiquement installés l'un à côté de l'autre dans la grange les électrificateurs.

Avantageusement, l'application dédiée ou la page sur la toile dédiée, présente un paramétrage possible permettant à l'utilisateur d'ajouter sur la silhouette de l'électrificateur, ou dans la palette des signaux sonores, des options d'IHM absentes de son modèle d'électrificateur, mais physiquement présentes sur d'autres électrificateurs plus sophistiqués de la même marque.

De manière analogue, un bouton graphique de marche/arrêt à distance ou de variation de puissance de l'électrificateur qui ne disposerait pas physiquement d'un tel bouton peut être présenté sur l'écran du terminal de poche, sur, ou au voisinage immédiat de, la silhouette de l'électrificateur. Au moyen de ce bouton graphique, l'utilisateur peut commander à distance la marche ou l'arrêt de l'électrificateur ou commander au microcontrôleur de l'électrificateur de réduire la puissance maximale des impulsions délivrées par l'électrificateur.

Selon un mode de réalisation de l'invention, l'utilisateur peut identifier l'électrificateur par un nom, apparaissant sur, ou à proximité immédiate de la silhouette de l'électrificateur sur l'écran du terminal de poche.

Avantageusement, l'état de la clôture en son point de départ, mesuré par l'électrificateur par exemple sous forme d'une mesure arrondie de tension, est affiché sur l'écran du terminal de poche de préférence sous forme concaténée au nom donné à l'électrificateur pour son identification.

Selon un mode de réalisation, la clôture électrique est alimentée par un électrificateur et comporte plusieurs répondeurs associés à l'électrificateur. Chacun des répondeurs mesure la tension de la clôture électrique à son emplacement et la transmet à l'électrificateur pour que ce dernier déclenche, le cas échéant, un signal d'alarme. Les répondeurs sont individuellement identifiés et géolocalisés sur un fond de carte affichable sur l'écran du terminal de poche.

Le marqueur de géolocalisation d'un répondeur est de préférence la silhouette caractéristique du répondeur sur laquelle est reprise la représentation graphique de tout ou partie des témoins de fonctionnement visuels, physiquement présents sur le répondeur, et qui seraient observables par l'utilisateur s'il était à ce moment-là devant le répondeur. Lorsque l'utilisateur procède à une vérification à distance de l'état de la clôture électrique, l'écran du terminal de poche affiche l'image de l'électrificateur et une image de chacun des répondeurs avec son identification individuelle. En cas de signal d'alarme, l'utilisateur peut faire afficher sur l'écran du terminal de poche un fond de carte géographique sur lequel est géolocalisé le répondeur ou l'électrificateur émetteur du signal d'alarme. Selon un mode de réalisation, le marqueur de géolocalisation sur la carte est une miniature donnant accès, sur demande, d'un simple clic de l'utilisateur sur l'écran, à une photographie en situation du répondeur ou de l'électrificateur à l'origine de l'émission du signal d'alarme. Une telle photographie a, de préférence, été préalablement prise par l'utilisateur au point précis correspondant à la position du répondeur ou de l'électrificateur sur le terrain et la géolocalisation du répondeur ou de l'électrificateur a été réalisée lors de la prise de cette photo grâce au GPS du terminal de poche.

Selon un mode de réalisation, l'un des paramètres de la clôture électrique, tel qu'il est mesuré par l'électrificateur ou un répondeur, est retenu en mémoire. Lors d'une opération de vérification de l'état de la clôture, l'utilisateur peut commander l'affichage, sur l'écran du terminal de poche, de la courbe représentative de l'historique des mesures de ce paramètre.

Ce paramètre peut être le nombre de touches dans le temps de la clôture électrique par les animaux parqués. Lorsque ce nombre augmente, c'est en général pour une cause d'origine inhabituelle, comme une pénurie d'eau et l'intervention rapide de l'utilisateur est en général bénéfique.

Par ailleurs, l'utilisateur a la possibilité de programmer une plage horaire quotidienne pendant laquelle l'électrificateur reste à l'arrêt. En effet, lorsque le bétail rentre dans un local pour la nuit, il n'est pas utile de laisser fonctionner l'électrificateur. Le terminal de poche comporte une application dédiée à la commande automatique d'arrêt, et de mise en marche, à heures fixes de l'électrificateur.

Le système de contrôle pour clôture électrique selon l'invention assure, dans de bonnes conditions de sécurité et de rapidité, la vérification à distance par l'utilisateur, du fonctionnement d'un ou plusieurs électrificateurs, associés chacun à un ou plusieurs répondeurs. Le terminal de poche de l'utilisateur assure sur son écran la reproduction d'une image comprenant à la fois la silhouette caractéristique d'un électrificateur ou répondeur et la représentation graphique des témoins de fonctionnement de l'électrificateur ou répondeur, dans leur position relative, sur la silhouette. La représentation, visible sur l'écran du terminal de poche, de l'électrificateur ou du répondeur, améliore sensiblement la sécurité dans l'identification de l'électrificateur ou du répondeur. Enfin, la durée de l'intervention pour une vérification à distance du fonctionnement d'une clôture électrique est très courte.

## Revendications

1. Système de contrôle pour clôture électrique, comprenant un électrificateur et un terminal de poche en liaison RF entre eux, **caractérisé en ce que** lors d'une opération de vérification à distance par l'utilisateur, du fonctionnement de l'électrificateur, le terminal de poche, au moyen d'une application dédiée, est adapté à afficher sur son écran, une reproduction de l'électrificateur sous forme d'une image comprenant à la fois une silhouette caractéristique de l'électrificateur et une représentation graphique de témoins du fonctionnement en cours de l'électrificateur dans leur position relative sur la silhouette, le terminal de poche étant configuré de façon que l'image observée sur l'écran du terminal de poche par l'utilisateur corresponde à celle qu'il aurait s'il était en présence de l'électrificateur.

2. Système de contrôle selon la revendication 1, **caractérisé en ce que** le terminal de poche assure la reproduction par son et/ou vibration d'au moins une composante d'un message mécanique, cette composante étant prise parmi l'ensemble comprenant à la fois la réplique des signaux sonores en cours de l'électrificateur et celle des vibrations en cours de l'électrificateur.

3. Système de contrôle selon la revendication 2, **caractérisé en ce que** la réplique des signaux sonores de l'électrificateur comprend celle du signal d'alarme et l'interruption à distance de ce signal se commande par action à l'écran du terminal de poche sur la représentation graphique du bouton de désarmement placé sur la silhouette dans la même position relative que sur l'électrificateur dans la réalité.

4. Système de contrôle selon l'une des revendications 1 à 3, **caractérisé en ce que** en cas de pluralité d'électrificateurs en liaison RF avec le même terminal de poche, lors d'une opération de vérification à distance du fonctionnement de l'un des électrificateurs, le terminal de poche assure sur son écran la représentation simultanée des images correspondant aux différents électrificateurs.

5. Système de contrôle selon l'une des revendications 1 à 4, **caractérisé en ce qu'**un bouton graphique de commande de marche/arrêt à distance de l'électrificateur n'en disposant pas physiquement est présenté sur l'écran du terminal de poche, sur, ou au voisinage immédiat de, la silhouette de l'électrificateur.

6. Système de contrôle selon l'une des revendications 1 à 5, **caractérisé en ce que** le terminal de poche affiche sur son écran l'identification donnée par l'utilisateur à l'électrificateur.

7. Système de contrôle selon l'une des revendications 1 à 6, **caractérisé en ce que** lorsque la clôture électrique comporte des répondeurs, le terminal de poche affiche sur son écran l'identification donnée par l'utilisateur à chacun des répondeurs et leur image.

8. Système de contrôle selon l'une des revendications 6 et 7, **caractérisé en ce que** le terminal de poche affiche sur son écran, la tension de la clôture électrique mesurée par l'électrificateur ou le répondeur.

9. Système de contrôle selon l'une des revendications selon 7 et 8 **caractérisé en ce qu'**en cas de signal d'alarme, le terminal de poche affiche sur son écran un fond de carte géographique sur lequel est géolocalisé le répondeur ou l'électrificateur émetteur du signal d'alarme.

10. Système de contrôle selon la revendication 9, **caractérisé en ce que** le marqueur de géolocalisation sur la carte est une miniature donnant accès, sur demande, à une photographie en situation du répondeur à l'origine de l'émission du signal d'alarme.

11. Système de contrôle selon l'une des revendications 1 à 10, **caractérisé en ce que** sur commande de l'utilisateur, le terminal de poche affiche sur son écran la courbe représentative de l'historique des mesures d'un paramètre de la clôture électrique par l'électrificateur.

12. Système de contrôle selon l'une des revendications 1 à 11, **caractérisé en ce que**, sur commande de l'utilisateur, le terminal de poche assure l'application, sur la silhouette de l'électrificateur et/ou dans les signaux sonores, d'options d'IHM (Interfaces Homme-Machine) non présentes physiquement dans l'électrificateur mais disponibles sur d'autres électrificateurs plus sophistiqués de la même origine.

13. Système de contrôle selon la revendication 1, **caractérisé en ce que** le terminal de poche comporte une application dédiée à la commande automatique d'arret, et de mise en marche, à heures fixes de l'électrificateur.

14. Système de contrôle selon la revendication 11, **caractérisé en ce que** le terminal de poche comporte une application dédiée à l'affichage du nombre de touches dans le temps de la clôture par un animal.

## Patentansprüche

1. Kontrollsystem für Elektrozaun, umfassend ein Netzgerät und ein tragbares Endgerät, die in Funkverbindung untereinander stehen, **dadurch gekennzeichnet, dass** bei einem Vorgang zur Überprüfung des Betriebs des Netzgeräts aus der Ferne durch den Benutzer das tragbare Endgerät mittels einer dedizierten Anwendung geeignet ist, auf seinem Bildschirm eine Wiedergabe des Netzgeräts in Form eines Bilds anzuzeigen, das sowohl einen charakteristischen Umriss des Netzgeräts als auch eine grafische Darstellung von Kontrolleinrichtungen für den aktuellen Betrieb des Netzgeräts in ihrer jeweiligen Position auf dem Umriss umfasst, wobei das tragbare Endgerät so ausgestaltet ist, dass das von dem Benutzer auf dem Bildschirm des tragbaren Endgeräts betrachtete Bild dem entspricht, das er hätte, wenn er in Gegenwart des Netzgeräts wäre.

2. Kontrollsystem nach Anspruch 1, **dadurch gekennzeichnet, dass** das tragbare Endgerät die Wiedergabe durch Ton und/oder Vibration mindestens einer Komponente einer mechanischen Meldung gewährleistet, wobei diese Komponente aus der Gruppe gewählt ist, die sowohl die Nachbildung der aktuellen akustischen Signale des Netzgeräts als auch die der aktuellen Vibrationen des Netzgeräts umfasst.

3. Kontrollsystem nach Anspruch 2, **dadurch gekennzeichnet, dass** die Nachbildung der akustischen Signale des Netzgeräts die des Alarmsignals umfasst und die Unterbrechung dieses Signals aus der Ferne durch eine Aktion auf dem Bildschirm des tragbaren Endgeräts auf der grafischen Darstellung der Schaltfläche zum Deaktivieren gesteuert wird, die auf dem Umriss in der gleichen relativen Position wie an dem Netzgerät in Wirklichkeit angeordnet ist.

4. Kontrollsystem nach einem der Ansprüche 1 bis 3, **dadurch gekennzeichnet, dass** im Fall einer Mehrzahl von Netzgeräten, die in Funkverbindung mit demselben tragbaren Endgerät stehen, bei einem Vorgang zur Überprüfung des Betriebs eines der Netzgeräte aus der Ferne das tragbare Endgerät auf seinem Bildschirm die gleichzeitige Darstellung der den verschiedenen Netzgeräten entsprechenden Bilder gewährleistet.

5. Kontrollsystem nach einem der Ansprüche 1 bis 4, **dadurch gekennzeichnet, dass** eine grafische Schaltfläche zum Ein-/Ausschalten aus der Ferne des Netzgeräts, das physisch nicht darüber verfügt, auf dem Bildschirm des tragbaren Endgeräts auf dem oder in unmittelbarer Nähe des Umrisses des Netzgeräts vorhanden ist.

6. Kontrollsystem nach einem der Ansprüche 1 bis 5, **dadurch gekennzeichnet, dass** das tragbare Endgerät auf seinem Bildschirm die dem Netzgerät von dem Benutzer zugewiesene Bezeichnung anzeigt.

7. Kontrollsystem nach einem der Ansprüche 1 bis 6, **dadurch gekennzeichnet, dass**, wenn der Elektrozaun Transponder beinhaltet, das tragbare Endgerät auf seinem Bildschirm die jedem der Transponder von dem Benutzer zugewiesene Bezeichnung und ihr Bild anzeigt.

8. Kontrollsystem nach einem der Ansprüche 6 und 7, **dadurch gekennzeichnet, dass** das tragbare Endgerät auf seinem Bildschirm die von dem Netzgerät oder dem Transponder gemessene Spannung des Elektrozauns anzeigt.

9. Kontrollsystem nach einem der Ansprüche 7 und 8, **dadurch gekennzeichnet, dass** das tragbare Endgerät im Fall eines Alarmsignals auf seinem Bildschirm einen Landkartenhintergrund anzeigt, auf dem der Transponder oder das Netzgerät geolokalisiert ist, der bzw. das das Alarmsignal sendet.

10. Kontrollsystem nach Anspruch 9, **dadurch gekennzeichnet, dass** der Geolokalisierungsmarker auf der Karte eine Miniatur ist, die auf Verlangen Zugang zu einer Situationsfotografie des Transponders bietet, der ursächlich für das Senden des Alarmsignals ist.

11. Kontrollsystem nach einem der Ansprüche 1 bis 10, **dadurch gekennzeichnet, dass** das tragbare Endgerät auf Befehl des Benutzers auf seinem Bildschirm die Kurve anzeigt, die für den Verlauf der Messungen eines Parameters des Elektrozauns durch das Netzgerät repräsentativ ist.

12. Kontrollsystem nach einem der Ansprüche 1 bis 11, **dadurch gekennzeichnet, dass** das tragbare Endgerät auf Befehl des Benutzers die Anwendung, auf dem Umriss des Netzgeräts und/oder in den akustischen Signalen, von Optionen einer MMI (Mensch-Maschine-Schnittstellen) gewährleistet,
die in dem Netzgerät nicht physisch vorhanden sind, aber bei anderen komplexeren Netzgeräten desselben Ursprungs verfügbar sind.

13. Kontrollsystem nach Anspruch 1, **dadurch gekennzeichnet, dass** das tragbare Endgerät eine dedizierte Anwendung zum automatischen Steuern des Ausschaltens und des Einschaltens des Netzteils zu festgelegten Uhrzeiten beinhaltet.

14. Kontrollsystem nach Anspruch 11, **dadurch gekennzeichnet, dass** das tragbare Endgerät eine dedizierte Anwendung zum Anzeigen der Anzahl der Berührungen des Zauns durch ein Tier im Laufe der Zeit beinhaltet.

## Claims

1. Control system for an electric fence, comprising an energizer and a hand-held terminal with an RF connection to one another, **characterized in that** during an operation for the user to remotely check the functioning of the energizer, the hand-held terminal, by means of a dedicated application, is designed to display on its screen a reproduction of the energizer in the form of an image comprising both a characteristic silhouette of the energizer and a graphical representation of indicators of the present functioning of the energizer in their relative position on the silhouette, the hand-held terminal being configured such that the image observed on the screen of the hand-held terminal by the user corresponds to that which they would have if they were in the presence of the energizer.

2. Control system according to Claim 1, **characterized in that** the hand-held terminal uses sound and/or vibration to reproduce at least one component of a mechanical message, this component being taken from the set comprising both the replica of the present sound signals from the energizer and that of the present vibrations from the energizer.

3. Control system according to Claim 2, **characterized in that** the replica of the sound signals from the energizer comprises that of the alarm signal, and the remote interruption of this signal is controlled by action on the screen of the hand-held terminal on the graphical representation of the deactivation button placed on the silhouette in the same relative position as on the energizer in reality.

4. Control system according to one of Claims 1 to 3, **characterized in that** if a plurality of energizers have an RF connection to the same hand-held terminal, during an operation to remotely check the functioning of one of the energizers, the hand-held terminal simultaneously shows on its screen the images corresponding to the various energizers.

5. Control system according to one of Claims 1 to 4, **characterized in that** a graphical button for remote on/off control of the energizer, which does not physically have one, is presented on the screen of the hand-held terminal, on, or in the immediate vicinity of, the silhouette of the energizer.

6. Control system according to one of Claims 1 to 5, **characterized in that** the hand-held terminal displays on its screen the identification provided by the user to the energizer.

7. Control system according to one of Claims 1 to 6, **characterized in that** when the electric fence has responders, the hand-held terminal displays on its screen the identification provided by the user to each of the responders and their image.

8. Control system according to either of Claims 6 and 7, **characterized in that** the hand-held terminal displays on its screen the voltage of the electric fence measured by the energizer or the responder.

9. Control system according to either of Claims 7 and 8, **characterized in that** in the event of an alarm signal, the hand-held terminal displays on its screen a geographical map background on which the responder or energizer transmitting the alarm signal is geolocated.

10. Control system according to Claim 9, **characterized in that** the geolocation marker on the map is a miniature providing access, on request, to an in situ photograph of the responder behind the transmission of the alarm signal.

11. Control system according to one of Claims 1 to 10, **characterized in that** at the command of the user, the hand-held terminal displays on its screen the curve representing the history of measurements of a parameter of the electric fence by the energizer.

12. Control system according to one of Claims 1 to 11, **characterized in that** at the command of the user, the hand-held terminal applies to the silhouette of the energizer, and/or to the sound signals, HMI (humanmachine interface) options
that are not physically present in the energizer but available on other, more sophisticated energizers of the same origin.

13. Control system according to Claim 1, **characterized in that** the hand-held terminal has an application dedicated to automatically controlling the turning-off, and turning-on, of the energizer at fixed times.

14. Control system according to Claim 11, **characterized in that** the hand-held terminal has an application dedicated to displaying the number of occasions the fence is touched by an animal over time.
